# EUROPEAN PATENT APPLICATION

(11) **EP 2 045 122 A1**
(43) Date of publication of application: **08.04.2009**
(21) Application number: 07768376.1
(22) Date of filing: 09.07.2007
(51) Int. Cl.: B60N 3/06, A47C 7/50

(54) **OTTOMAN FOR VEHICLE SEAT**

(30) Priority: 07.07.2006 JP 2006188561
(71) Applicant: TS Tech Co., Ltd, Asaka-shi, Saitama 351-0012 (JP)
(72) Inventor: SHINOZAKI, Katsuhiko, Shioya-gun, Tochigi 329-1217 (JP)
(74) Representative: Wilson Gunn
(86) International application number: PCT/JP2007/063702
(87) International publication number: WO 2008/004696

(57) **Abstract**

The rotation range of an ottoman (4) includes a use range (A) and a release range (B). In the use range (A) the ottoman (4) is substantially movable in an upper direction only. When the ottoman (4) reaches the release range (B) beyond the use range (A), the locking mechanism (L) of the ottoman (4) is changed into an unlocked state and a counterclockwise rotation of the ottoman (4) is permitted. When the ottoman (4) moves downward until the end of the use range (A), the locking mechanism is returned to a locked state so as to allow an upward movement of the ottoman (4) only.

## Description

### Technical Field

The present invention relates to an ottoman for a vehicle seat, and particularly to a height position adjusting mechanism of the ottoman.

### Background Art

A prior-art ottoman for a vehicle seat has such a structure that its height position is changed by power of an electric motor. Therefore, the prior-art ottoman is expensive, heavy, and large.
Patent Document 1: JP 10-236208 A

### Disclosure of the Invention

Therefore, it is an object of the present invention to provide an ottoman with a hand-operated height position adjusting mechanism mounted therein. In this way, the ottoman becomes inexpensive to manufacture and light-weight. The ottoman of the invention is **characterized in that** its height position can be adjusted steplessly in a use range.

### Brief Description of the Drawings

FIG. 1 is a perspective view of a vehicle seat according to the present invention.
FIG. 2 is a side view of a state of rotation of the ottoman with respect to the vehicle seat.
FIG. 3 is a perspective view of a framework of the ottoman.
FIG. 4 is a perspective view of the framework of the ottoman.
FIG. 5 is an exploded perspective view of a height position adjusting mechanism (lock mechanism) of the ottoman.
FIG. 6 is a sectional view of the lock mechanism.
FIG. 7 is a sectional view of an upper lateral lever and a side frame of the framework of the ottoman.
FIG. 8 is a drawing for explaining a positional relationship and showing a working state of the lock mechanism.
FIG. 9 is a front view of the lock mechanism.
FIG. 10 is a side view of the lock mechanism.

### Best Mode for Carrying Out the Invention

An embodiment of the present invention will be described with reference to the drawings. A vehicle seat 1 of the invention includes a seat bottom 2, a seat back 3 mounted on the seat bottom 2 so that its inclination angle can be adjusted, an ottoman 4 provided in front of the seat bottom 2, and a headrest 90.

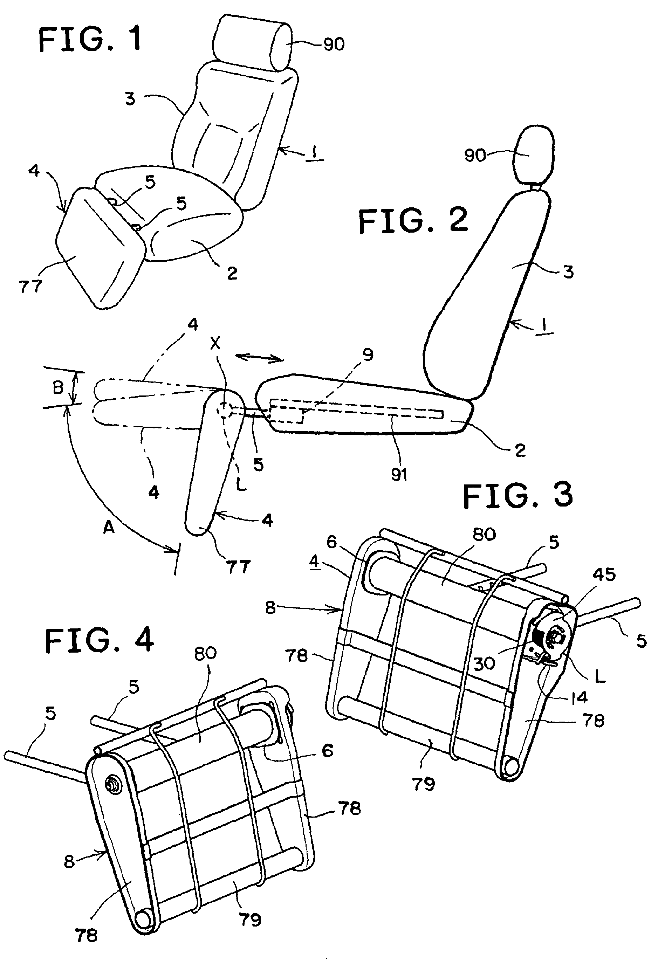

As can be easily understood from FIG. 2, the ottoman 4 is supported on the seat bottom 2 to be rotatable about an axis X. A rotation range of the ottoman 4 is about 90 degrees and includes a use range A and a release range B. In the use range A that constitutes a large part of the rotation range, the ottoman 4 is movable substantially in an upper direction only. In other words, the ottoman 4 does not rotate counterclockwise, because it is supposed to support user's calves. When the ottoman 4 reaches the release range B beyond the use range A, a lock mechanism L of the ottoman 4 is changed into an unlocked state and the ottoman 4 is allowed to rotate counterclockwise. When the ottoman 4 is lowered until it reaches the end of the use range A, the lock mechanism is returned to a locked state and the ottoman 4 is allowed to move in the upper direction only.

The ottoman 4 has a pair of support levers 5 and tip ends of the support levers 5 are mounted on support members 9 of the seat bottom 2. The support members 9 are preferably cylindrical members into which the support levers 5 are inserted. By sliding the support levers 5 with respect to the support members 9, it is possible to adjust a front-rear position of the ottoman 4. The support members 9 are fixed to a seat bottom frame 91 of the seat bottom 2.

A framework 8 of the ottoman 4 includes a pair of left and right arm-shaped side frames 78 and lateral levers 79, 80 coupling the side frames 78, 78. In the embodiment, the support levers 5 are fixed to the lateral lever 80 and coupling brackets 6 are fixed to end portions of the lateral lever 80. To the coupling brackets 6, the framework 8 (side frames 78) is mounted rotatably.

The side frame 78 and the coupling bracket 6 are coupled to each other with the lock mechanism L interposed therebetween. The lock mechanism L is preferably provided to the outside of either one of the side frames 78. The lock mechanism L has a collar 7 parallel to the rotation axis X of the ottoman 4. The collar 7 includes an annular step portion 10 formed at a central portion, a small-diameter collar 12 extending from the annular step portion 10 toward the side frame 78 as shown with an arrow Y, and a large-diameter collar 11 extending in the opposite direction from the annular step portion 10 as shown with an arrow Z.

An L-shaped bracket 14 is fixed to the side frame 78. A main plate 15 of the L-shaped bracket 14 is formed with a cylindrical burring portion 16 protruding in a direction of the arrow Z. An inside diameter of the burring portion 16 is equal to an outside diameter of the small-diameter collar 12 of the collar 7. If the small-diameter collar 12 is inserted through a through hole 17 of the burring portion 16, the annular step portion 10 of the collar 7 comes in contact with an end face 18 of the burring portion 16.

A plurality of protrusions 20 are formed at a tip end of the small-diameter collar 12. The respective protrusions 20 are inserted into engaging holes 26 in a disk 25. After inserted into the burring portion 16, the collar 7 is engaged with the disk 25. In this state, by energization of the collar 7 and the disk 25, the collar 7, the L-shaped bracket 14, and the disk 25 are fixed to one another by projection welding.

The lock mechanism L includes a lock spring 30 and a coil portion 31 of the lock spring 30 is disposed over an outer periphery of the large-diameter collar 11. A first leg portion 33 of the lock spring 30 is fixed to the L-shaped bracket 14 by a stay 32.

A spring cover 45 is fixed to an end portion of the large-diameter collar 11. The spring cover 45 includes a disk-shaped plate 46 and a bent flange 63 extending from an outer peripheral edge of the disk-shaped plate 46 toward the side frame 78. The bent flange 63 has an opening portion 62 for housing a second leg portion 35 of the lock spring 30. One of side faces of the opening portion 62 is formed with an unlocking contact wall 47 substantially parallel to an axial direction of a shaft 74 and the other side face of the opening portion 62 is formed with a return inclined wall 52.

When the side frames 78 (ottoman 4) are moved downward, a coil portion 31 of the lock spring 30 is wound up, a diameter of the coil portion 31 reduces, and friction resistance between the coil portion 31 and the collar 7 rapidly increases, which prevents downward movement of the side frames 78 (ottoman 4).

A bent portion 39 of the L-shaped bracket 14 has a window portion 38 which the second leg portion 35 of the lock spring 30 can enter. The window portion 38 has an unlocking retaining face 36 for retaining the second leg portion 35 in an unlocked position. The second leg portion 35 is biased in a direction of the arrow Y by its own elasticity.

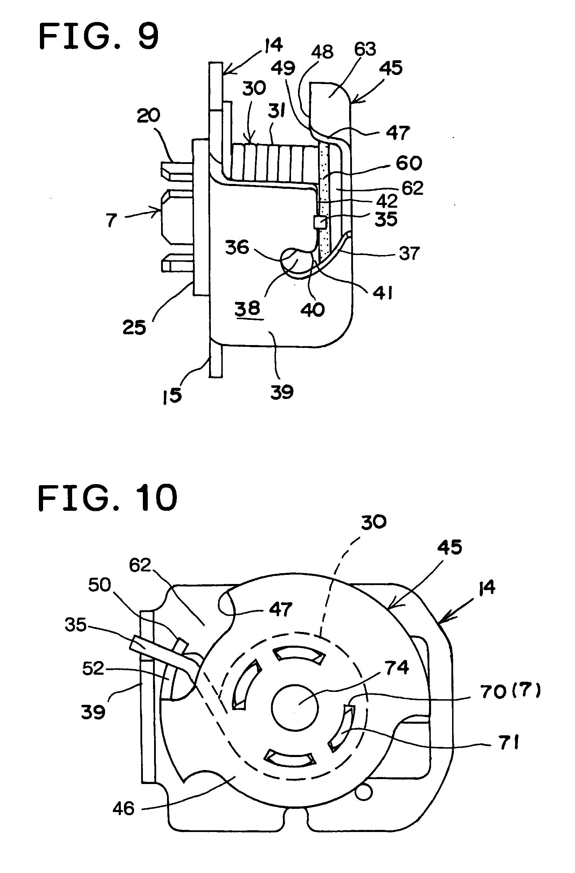

The window portion 38 has a guide cam face 37 for guiding the second leg portion 35 into the window portion 38. The guide cam face 37 is formed on a downward rotation side of the window portion 38 to be inclined to gradually rise as it extends toward an open (left) end of the window portion 38. Between an outer end of the unlocking retaining face 36 and a tip end of the guide cam face 37, a clearance 41 through which the second leg portion 35 can pass is provided (FIG. 9). The tip end of the guide cam face 37 is positioned outside and above the outer end of the unlocking retaining face 36.

At the outer end (exit) of the unlocking retaining face 36, an arc-shaped guide face 40 is formed. The bent portion 39 has a flange face 42 positioned above the guide face 40. The flange face 42 is positioned inside the tip end of the guide cam face 37.

The unlocking contact wall 47 comes in contact with the locked second leg portion 35 and guides the second leg portion 35 into the window portion 38. In other words, if the side frames 78 (ottoman 4) are moved up, the diameter of the coil portion 31 of the lock spring 30 increases and the ottoman 4 freely moves upward in the use range A. At this time, if the side frames 78 move up beyond the use range A, the unlocking contact wall 47 comes in contact with the second leg portion 35 to push the second leg portion 35 against the guide cam face 37. As a result, the second leg portion 35 is guided into the window portion 38.

In this state, the second leg portion 35 is engaged with the unlocking retaining face 36, relative positions of the first leg portion 33 and the second leg portion 35 of the lock spring 30 are fixed, the coil portion 31 is maintained in a loosened state, and the lock mechanism L is unlocked.

The bent flange 63 of the spring cover 45 is formed with a closing wall 48. The closing wall 48 is positioned slightly inside the flange face 42 of the bent portion 39. When the side frames 78 are moved up beyond the use range A, the closing wall 48 closes the clearance 41 of the window portion 38 to thereby prevent the second leg portion 35 from disengaging itself from the window portion 38.

The second leg portion 35 moves from the unlocking contact wall 47 to the unlocking retaining face 36 when the side frames 78 move up beyond the use range A and the unlocking contact wall 47 is aligned with the unlocking retaining face 36. In other words, if the second leg portion 35 collides with the unlocking retaining face 36, that means there is a difference in level created between the unlocking contact wall 47 and the unlocking retaining face 36 when the second leg portion 35 passes the end portion of the unlocking contact wall 47. The timing of movement of the second leg portion 35 handed from the unlocking contact wall 47 to the unlocking retaining face 36 is when the unlocking contact wall 47 and the unlocking retaining face 36 form a substantially straight line. The second leg portion 35 moves when there is no difference in level between the unlocking contact wall 47 and the unlocking retaining face 36.

A part of an inner end of the unlocking contact wall 47 is formed into an arc-shaped guide face 49, an outer end portion of the unlocking retaining face 36 of the window portion 38 of the bent portion 39 is formed with the arc-shaped guide face 40, and the guide face 49 and/or the guide face 40 absorb the difference in level that may be created between the unlocking contact wall 47 and the unlocking retaining face 36 due to manufacturing and assembly tolerances. The second leg portion 35 moves while sliding in contact with the guide face 49 and the guide face 40, which prevents an abnormal sound caused by collision of the second leg portion 35 with the unlocking retaining face 36.

For this purpose, the guide face 40 and the guide face 49 are formed into the arc-shaped faces having larger radii than the tolerances to absorb the difference in level between the unlocking contact wall 47 and the unlocking retaining face 36. As a result, the second leg portion 35 moves while kept sliding in contact with the unlocking contact wall 47 and the unlocking retaining face 36 and without producing the abnormal sound caused by collision of the second leg portion 35 with the unlocking retaining face 36.

The flange face 42 of the bent portion 39 and the closing wall 48 of the spring cover 45 are disposed to overlap each other in an axial direction of the collar 7. The arc-shaped faces of the guide face 40 and the guide face 49 overlap each other in the axial direction of the collar 7 to make the movement from the unlocking contact wall 47 to the unlocking retaining face 36 smooth to suppress generation of the abnormal sound.

The second leg portion 35 is pushed by the unlocking contact wall 47 while sliding in contact with the flange face 42 and moves toward the unlocking retaining face 36 of the window portion 38 while passing the flange face 42 and then the guide face 40 to come in contact with the unlocking retaining face 36. Then, the second leg portion 35 that has passed the guide face 40 is continuously pushed inward by the arc-shaped face of the guide face 49 while sliding in contact with the unlocking retaining face 36.

The second leg portion 35 that has been in contact with the flange face 42 is engaged in the window portion 38 without leaving a side edge of the bent portion 39. Therefore, the second leg portion 35 is prevented by its own elasticity from colliding with the side edge of the bent portion 39 or an inner periphery of the window portion 38 and generation of the abnormal sound (a hitting sound, a metallic collision sound) is prevented.

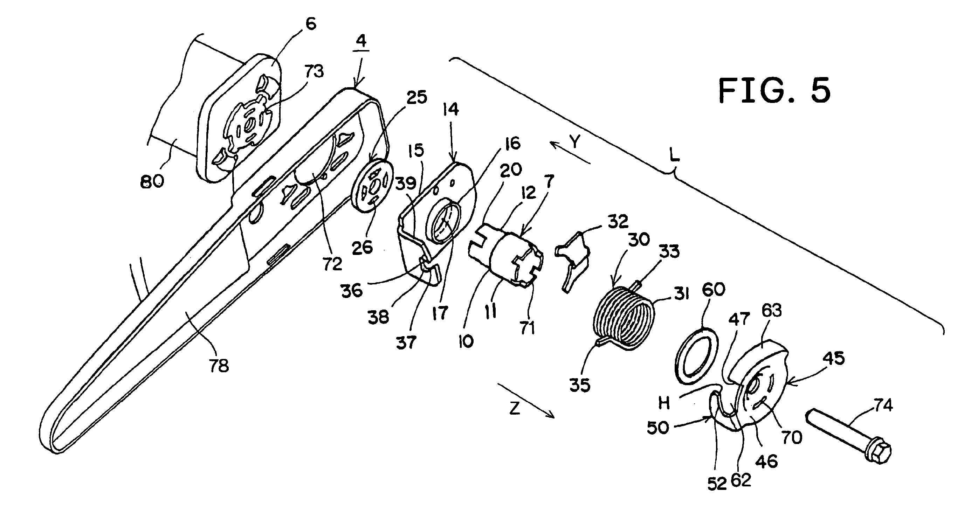

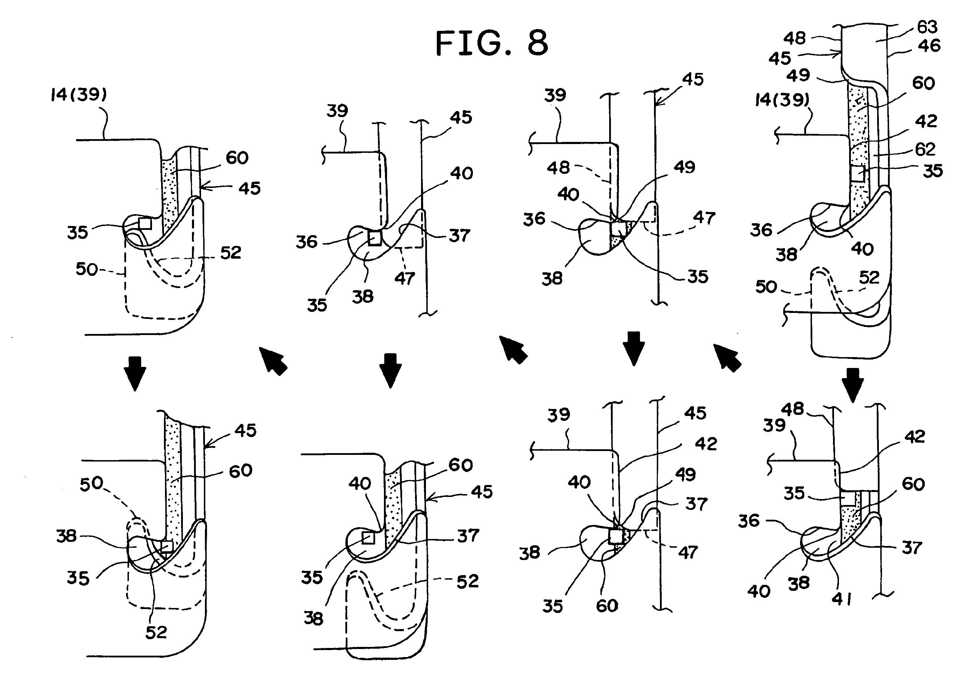

A front portion of the disk-shaped plate 46 is formed with an unlocking canceling portion 50 (FIGS. 5, 8) for disengaging the second leg portion 35 engaged with the unlocking retaining face 36 of the window portion 38 from the unlocking retaining face 36 to return it to a free state. The unlocking canceling portion 50 is formed of a bent portion 51 formed by bending a front end portion of the disk-shaped plate 46 toward the L-shaped bracket 14.

An upper face of the bent portion 51 forms the return inclined wall 52 inclined downward (in a direction of upward rotation) to be low as it extends from a tip end to a base portion. The tip end portion of the return inclined wall 52 is positioned inside the window portion 38 (unlocking retaining face 36). The return inclined wall 52 of the unlocking canceling portion 50 guides and moves the second leg portion 35 in contact with the unlocking retaining face 36 to disengage it from the unlocking retaining face 36 (window portion 38) to switch from the unlocked state to the lockable state.

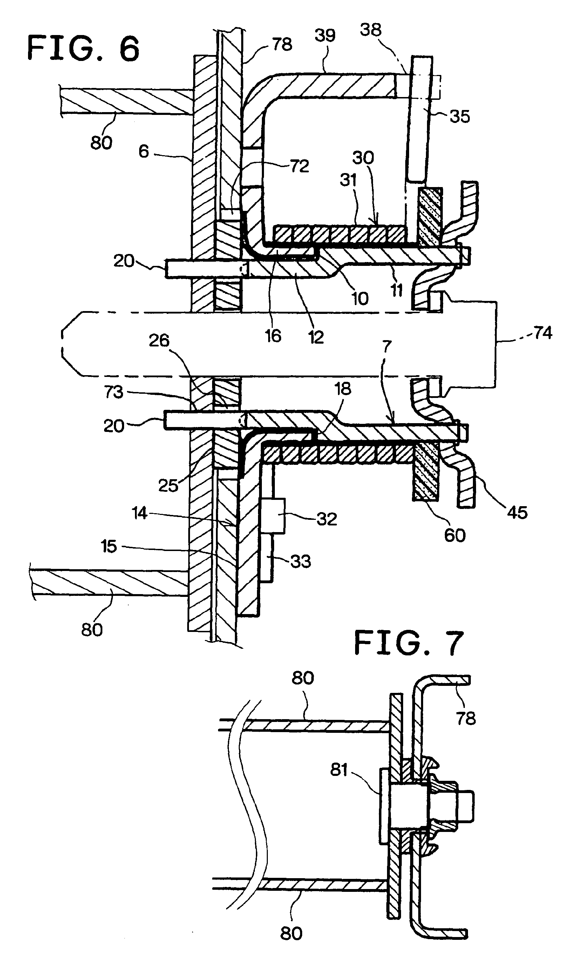

A resin washer 60 is provided inside the disk-shaped plate 46 of the spring cover 45 (FIG. 6). The resin washer 60 is sandwiched between an inner face of the disk-shaped plate 46 of the spring cover 45 and the coil portion 31 of the lock spring 30. The resin washer 60 has a function of constantly pushing the second leg portion 35 against the flange face 42 of the bent portion 39. The second leg portion 35 disengaged from the unlocking retaining face 36 comes in contact with the resin washer 60, which suppresses generation of an abnormal sound.

The disk-shaped plate 46 of the spring cover 45 is formed with engaging holes 70. Engaging protrusions 71 formed at an outer end portion of the large-diameter collar 11 of the collar 7 are engaged in the engaging holes 70 to fix the mounted position. In this state, the disk 25 and the respective protrusions 20 of the collar 7 protruding inside through the respective engaging holes 26 of the disk 25 protrude from a window hole 72 in the framework 8. The respective protrusions 20 are engaged in engaging holes 73 of the coupling bracket 6 and the collar 7 is fixed to the coupling bracket 6 from outside the spring cover 45 by using a fixing member 74 such as a bolt (FIG. 6).

The collar 7, the disk 25, and the spring cover 45 are fixed to the coupling bracket 6. The L-shaped bracket 14 fixed to the framework 8 is a member movable with respect to the collar 7. The first leg portion 33 of the lock spring 30 is locked to the L-shaped bracket 14 (framework 8).

Although the first leg portion 33 of the lock spring 30 rotates around the collar 7 as the ottoman 4 rotates, it is described as "fixed" in contrast to the second leg portion 35 of the lock spring 30 to facilitate understanding. However, this description does not restrict the structure.

The ottoman 4 is formed by attaching cushion material (not shown) to the framework 8 and covering an outer periphery of the cushion material with a skin member 77. The framework 8 may have any structure. For example, the framework 8 is formed by coupling tip ends of the left and right side frames 78 with the first lateral lever 79 (FIGS. 3 and 4). On the other hand, base portions of the support levers 5 are fixed to the second lateral lever 80, the coupling bracket 6 is fixed to one of the left and right ends of the second lateral lever 80 and one of the side frames 78 of the framework 8 is mounted on the coupling bracket 6 with the lock mechanism L interposed therebetween. To the other of the left and right ends of the second lateral lever 80, the other side frame 78 of the framework 8 is mounted by a mounting shaft 81 concentric with the collar 7.

If the ottoman 4 is rotated upward to an uppermost position of the use range A, the second leg portion 35 rotates upward with the ottoman 4 and comes in contact with the unlocking contact wall 47 of the disk-shaped plate 46 of the spring cover 45 fixed to the collar 7. If the second leg portion 35 comes in contact with the unlocking contact wall 47, only the movement of the second leg portion 35 is restricted and stopped.

Even after the movement of the second leg portion 35 is stopped by the unlocking contact wall 47, the upward rotation of the ottoman 4 is in such a direction as to loosen the coil portion 31 and therefore the ottoman 4 continues to rotate upward to reach the release range B and rotates the L-shaped bracket 14 around the collar 7.

In the release range B, when the second leg portion 35 the movement of which is stopped by the flange face 42 is aligned with the unlocking retaining face 36, the second leg portion 35 moves in the axial direction of the collar 7 toward the window portion 38 (inward), enters the window portion 38, and is engaged with the unlocking retaining face 36. At this time, because the second leg portion 35 is constantly biased by its own elasticity in such a direction as to be engaged in the window portion 38, the direction being the axial direction of the collar 7, the second leg portion 35 the upward rotation of which is stopped by the unlocking contact wall 47 moves toward the window portion 38 when it is aligned with the window portion 38.

Because the inner end of the unlocking contact wall 47 is formed with the arc-shaped guide face 49, the second leg portion 35 moves toward the unlocking retaining face 36 and is fitted in the window portion 38 as it is pushed by the guide face 49. If the second leg portion 35 is fitted in the window portion 38, the second leg portion 35 moves with the window portion 38 of the L-shaped bracket 14 and the first leg portion 33 of the lock spring 30 rotates with the stay 32 of the L-shaped bracket 14. Because a positional relationship between the second leg portion 35 and the first leg portion 33 does not change, the diameter of the coil portion 31 does not change, the lock mechanism L is brought into the unlocked state, and the ottoman 4 can freely rotate downward.

Since the second leg portion 35 is fitted in the window portion 38 when the ottoman 4 is in an upper limit position of the use range A in which the ottoman 4 is used for intended use thereof, if the ottoman 4 comes into the release range B beyond the use range A, the second leg portion 35 is constantly fitted in the window portion 38 and in the unlocked state.

The spring cover 45 is formed with the unlocking canceling portion 50 for disengaging the second leg portion 35 that is fitted in the window portion 38 to return it into the free state. Therefore, if the lock mechanism L is temporarily brought into the unlocked state and the ottoman 4 is rotated downward to the lowermost position of the use range A, the second leg portion 35 hits the return inclined wall 52 of the unlocking canceling portion 50. Furthermore, the second leg portion 35 that moves down due to the downward rotation of the ottoman 4 is guided outward by the return inclined wall 52, moves along the unlocking retaining face 36 outward in the axial direction of the collar 7, passes the outer end of the unlocking retaining face 36, passes through the clearance 41, and disengages itself from the window portion 38.

When the second leg portion 35 disengages itself from the window portion 38, it comes in contact with the flange face 42 of the bent portion 39, the position of the second leg portion 35 with respect to the first leg portion 33 becomes variable, and the lock mechanism L comes in an operating condition. The ottoman 4 can rotate upward freely but is not allowed to rotate downward and its height position is adjustable.

## Claims

1. An ottoman for a vehicle seat comprising:
a coupling bracket fixedly or detachably provided to a seat bottom of the vehicle seat;
a framework of the ottoman rotatably provided to a coupling bracket with a lock mechanism interposed therebetween so that the framework can be locked at a predetermined height position;
said lock mechanism including a lock spring having a coil portion for locking with frictional force in winding around an outer periphery of a collar provided to protrude sideways from the coupling bracket, a spring leg portion formed at one end portion of the coil portion to switch between locking due to winding of the coil portion and unlocking due to loosening of the coil portion, a window portion for engaging the spring leg portion to retain it in a locked position and an unlocked position, and a spring cover for engaging the spring led portion in the window portion;
said window portion having an unlocking retaining face substantially parallel to an axis of the collar;
said window portion and said spring cover arranged in an axial direction of the collar;
wherein the window portion and an unlocking contact wall of the spring cover move with respect to each other to move, in the axial direction of the collar, the spring leg portion radially protruding with respect to the axis of the collar to engage the spring leg portion in the window portion, and the spring leg portion moves from the unlocking contact wall to the unlocking retaining face when the unlocking contact wall and the unlocking retaining face are aligned with each other.

2. The ottoman for a vehicle seat according to claim 1, wherein the spring leg portion is constantly biased due to its own elasticity in such a direction as to be engaged in the window portion, the direction being the axial direction of the collar.

3. The ottoman for a vehicle seat according to claim 2, wherein the spring cover is provided at its peripheral edge with a return inclined wall for moving the spring leg portion in contact with the unlocking retaining face in such a direction as to disengage the spring leg portion, the direction being the axial direction of the collar.
